# FASCICULE DE BREVET EUROPEEN

(11) **EP 3 814 016 B1**
(45) Date de publication et mention de la délivrance du brevet: **18.08.2021**
(21) Numéro de dépôt: 20764091.3
(22) Date de dépôt: 01.09.2020
(51) Int. Cl.: B02C 17/18, B02C 23/08, C04B 18/16

(54) **PROCÉDÉ POUR DISSOCIER DIFFÉRENTS CONSTITUANTS D'UN BÉTON DE DÉCONSTRUCTION**
VERFAHREN ZUM TRENNEN VON VERSCHIEDENEN BESTANDTEILEN EINES BAUBETONS
METHOD OF SEPARATING DIFFERENT CONSTITUENTS OF A CONCRETE FOR DECONSTRUCTION

(30) Priorité: 02.09.2019 FR 1909630
(43) Date de publication de la demande: 05.05.2021
(73) Titulaire: Fives FCB, 59650 Villeneuve d'Ascq (FR)
(72) Inventeur: CORDONNIER, Alain, 59650 Villeneuve d'Ascq (FR); BOUDOT, François, 59650 Villeneuve d'Ascq (FR); FRUCHART, Alain, 59650 Villeneuve d'Ascq (FR); GUIMARD, Yannick, 59650 Villeneuve d'Ascq (FR); PORTAL, Jérôme, 59650 Villeneuve d'Ascq (FR)
(74) Mandataire: Bureau Duthoit Legros Associés
(86) Numéro de dépôt international: PCT/EP2020/074369
(87) Numéro de publication internationale: WO 2021/043775

(56) Documents cités:
- WO-A1-2013/087421
- FR-A- 1 578 032
- FR-A1- 2 959 679

## Description

### Domaine technique de l'invention

L'invention concerne un procédé pour dissocier différents constituants d'une fraction fine issue d'un procédé antérieur de dissociation d'un béton de déconstruction. En particulier l'invention concerne le recyclage des bétons de déconstruction.

### Arrière-plan technique

Le béton de ciment est largement utilisé dans les ouvrages de construction et d'infrastructure, c'est-à-dire par exemple les bâtiments, les routes et ouvrages d'art.

De manière classique, le béton de ciment, après séchage, est principalement composé de :
- 50% environ de gravillon,
- 30% environ de sable (au sens granulométrique de terme)
- 20 % environ de pâte de ciment, hydraté lors de la réaction de prise de ce béton.

Le ciment est un liant hydraulique produit à partir de clinker Portland.

La production du béton de ciment implique l'exploitation de ressources naturelles, notamment minérales pour extraire le granulat, comprenant du gravillon et du sable. L'impact sur l'environnement n'est donc pas négligeable, notamment du fait de l'exploitation de ressources naturelles non renouvelables, mais également à cause de la pollution et des nuisances causées par le transport de ces ressources depuis leur lieu d'extraction jusqu'au chantier où elles sont utilisées pour produire le béton. Cette exploitation a un impact sur l'environnement et développe un sentiment négatif dans l'opinion publique. Un exemple de production de ciment qui tient compte de l'impact sur l'environnement est décrit dans le document FR 2 959 679 A1.

Le développement durable étant devenu un enjeu stratégique, différents pays ont déjà favorisé, voire imposé, l'utilisation d'une part de bétons de déconstruction recyclés dans les nouveaux ouvrages, afin de développer des circuits courts.

Pour recycler au mieux les différents constituants du béton de déconstruction, il est important de bien séparer les différents constituants de ce béton II faut donc traiter le béton de déconstruction pour obtenir des gravillons, du sable et de la pâte de ciment hydraté.

Une première opération de dissociation consiste à broyer le béton de déconstruction pour obtenir des gravillons d'une part et une fraction fine d'autre part. Les gravillons présentent un diamètre minimal d'environ 2 à 6 millimètres et maximal jusqu'à 30 millimètres environ. Les gravillons ainsi recyclés sont stockés et prêts à être utilisés pour la production d'un nouveau béton. La fraction fine comprend des particules de mortier, qui est un mélange hétérogène de sable et de pâte de ciment hydraté, dont le diamètre est inférieur à 6 millimètres.

La fraction fine peut être utilisée directement comme constituant pour produire du nouveau béton en la substituant au sable.

L'utilisation de cette fraction fine en tant que sable de substitution présente plusieurs inconvénients.

Un inconvénient est qu'il n'est pas possible d'utiliser de grandes proportions de cette fraction fine en substitution du sable car elle contient une part importante de pâte de ciment hydraté qui présente des propriétés mécaniques et physico-chimiques différentes de celles du sable, notamment en termes de résistance mécanique et de porosité. En effet, la porosité importante de la pâte de ciment hydraté contenue dans la fraction fine rend plus difficile et hasardeux le dosage de la quantité d'eau à incorporer dans le mélange du nouveau béton, et ceci au détriment de la qualité dudit nouveau béton. Afin d'atténuer les effets délétères de ce dosage hasardeux, il convient d'ajouter de plus grandes quantités de ciments et d'adjuvants, ce qui augmente les coûts de production et a un impact évident sur l'environnement.

Un autre inconvénient est qu'il est difficile de connaître avec précision les proportions de sable et de pâte de ciment hydraté dans cette fraction fine si bien que les fabricants de béton tendent naturellement à minimiser la proportion de fraction fine en substitution du sable pour éviter de dégrader les performances du béton.

Alternativement, la fraction fine peut être incorporée comme composant d'un cru cimentier pour la fabrication d'un nouveau clinker de ciment, en substitution des matières naturelles classiquement utilisées telles que le calcaire et l'argile. Toutefois la fraction fine en tant que composant d'un cru cimentier se heurte à une difficulté à savoir la proportion de cette fraction fine dans le cru cimentier. En effet, cette proportion est largement minimisée en raison de la présence de silice dans la fraction fine, indésirable en proportion importante dans un cru cimentier. L'utilisation de davantage de fraction fine dans les crus cimentier offrirait de nombreux avantages.

Dans ce qui suit, la fraction fine issue de la première opération de dissociation est appelée matière d'alimentation.

L'invention vise à proposer une solution à au moins l'un des inconvénients précités. En particulier, l'invention vise à recycler la quasi-totalité de la fraction fine afin d'en incorporer de plus grandes proportions dans les crus cimentier et/ou dans les bétons.

### Résumé de l'invention

A cet effet, il est proposé en premier lieu un procédé pour dissocier différents constituants d'une fraction fine issue d'un procédé antérieur de dissociation d'un béton de déconstruction permettant la réutilisation de ces différents constituants dans la production d'un nouveau ciment et/ou d'un nouveau béton, la fraction fine comprenant du sable et au moins 30% en masse de pâte de ciment hydraté, la fraction fine étant ci-après dénommée la matière d'alimentation, le procédé mettant en oeuvre une installation comportant :
- un système d'attrition, et
- un système de séparation, et dans lequel le procédé comprend :
   - l'alimentation du système avec la matière d'alimentation pour broyer celle-ci,
   - l'attrition de la matière d'alimentation, et
   - la séparation de la matière d'alimentation broyée dans le système (3) d'attrition,, en une fraction sableuse comprenant une quantité de pâte de ciment hydraté inférieure ou égale à 25% et supérieure ou égale à 5% en masse, et en une fraction de pâte de ciment hydraté comprenant une quantité de pâte de ciment hydraté supérieure ou égale à 40% et inférieure ou égale à 95% en masse.

La dissociation de la matière d'alimentation en une fraction sableuse et une fraction de pâte de ciment hydraté dans les proportions ci-dessus comporte plusieurs avantages.

En vue de la réutilisation de la fraction sableuse comme sable pour béton de ciment, on vise à obtenir une fraction sableuse :
- ayant une granulométrie acceptable à cette réutilisation, c'est-à-dire dont la taille des grains est supérieure à une taille prédéterminée, et
- contenant le moins de pâte de ciment hydraté possible car celle-ci, du fait de sa porosité, nuirait à la maîtrise de la recette du nouveau béton.

Concernant la fraction de pâte de ciment hydraté, en vue de son utilisation comme composant d'un cru cimentier pour la fabrication d'un nouveau clinker de ciment, il est préférable qu'elle soit la plus pure possible pour que sa composition chimique se rapproche au plus près de celle d'un clinker de ciment.

Une pureté totale, c'est-à-dire une fraction de pâte de ciment hydraté dénuée de sable est industriellement irréaliste en raison de la complexité et des coûts associés.

La demanderesse a déterminé qu'une fraction sableuse contenant de la pâte de ciment hydraté et une fraction de pâte de ciment hydraté contenant du sable dans les proportions ci-dessus évoquées selon l'invention permet avantageusement d'incorporer une plus grande proportion de fraction sableuse dans un nouveau béton et une plus grande proportion de fraction de pâte de ciment hydraté dans un cru cimentier. Ceci a pour conséquence d'augmenter les taux de recyclage des bétons de déconstruction, réduisant l'impact environnemental de la production de ciment (réduction des rejets de CO₂ par apport de chaux décarbonatée réduisant l'utilisation de calcaire dans le cru cimentier et donc minimisant la décarbonatation et la consommation de combustible) et de la production de béton (réduction de la consommation de ressources naturelles de sable).

Il est par ailleurs souligné, que la demanderesse a déterminé que lorsque ces proportions sont respectées, la fraction sableuse et la fraction de pâte de ciment hydraté peuvent être respectivement utilisées, en tant que sable dans la production de béton, et composant d'un cru cimentier dans la production de clinker en toute sécurité et en quantités importantes.

Diverses caractéristiques supplémentaires peuvent être prévues seules ou en combinaison :
- la matière d'alimentation alimentant le système d'attrition présente des dimensions inférieures à 6 millimètres ;
- la séparation est réalisée au moyen d'une maille de coupure du système de séparation comprise entre 50 et 300 micromètres ;
- la séparation est réalisée au moyen d'une maille de coupure du système de séparation comprise entre 80 et 200 micromètres ;
- l'attrition est réalisée au moyen du système d'attrition comportant des corps broyant du type billes ou cylpebs ;
- l'attrition est réalisée au moyen du système d'attrition qui comprend une chambre sensiblement cylindrique de longueur L et de diamètre d, et dans lequel le rapport L/d est compris entre 1 et 5 ;
- l'attrition est réalisée au moyen du système d'attrition dont les billes ou cylpebs ont un diamètre compris entre 5 et 20 millimètres ;
- la vitesse de rotation du système d'attrition est comprise entre 60 et 85% d'une vitesse critique correspondant à la vitesse à laquelle les billes sont centrifugées ;
- la vitesse du gaz injecté dans le système d'attrition est comprise entre 0,5 et 3 m/s.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig 1] la figure 1 est une représentation schématique d'un procédé selon l'invention ;
[Fig 2] la figure 2 est une représentation schématique d'une installation selon l'invention.

### Description détaillée de l'invention

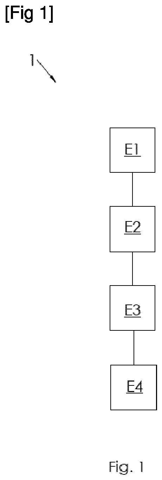

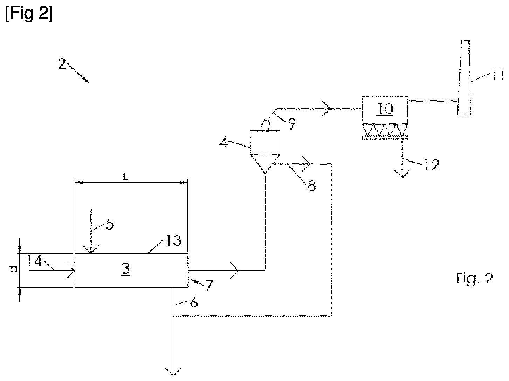

Sur la figure 1 est représenté un procédé 1 pour dissocier différents constituants d'une fraction fine issue d'un procédé antérieur de dissociation d'un béton de déconstruction. Le procédé 1 met en œuvre une installation 2 illustrée sur la figure 2. Dans ce qui suit, la fraction fine devient la matière d'alimentation.

L'installation 2 comporte un système 3 d'attrition et un système 4 de séparation. Le système 3 d'attrition est un broyeur à billes ou cylpebs. Les billes sont des corps broyant sensiblement sphériques. Les cylpebs sont des corps broyant sensiblement cylindriques parfois de forme tronconique ou en forme de tonneaux.

Le broyeur 3 est alimenté avec la matière d'alimentation par une entrée 5 au cours d'une étape E1 d'alimentation. Dans le broyeur 3, la matière d'alimentation est broyée au cours d'une étape E2 d'attrition. La matière d'alimentation comporte au moins 30% en masse de pâte de ciment hydraté. En général, la matière d'alimentation comporte de 35 à 50 % en masse de pâte de ciment hydraté. La pâte de ciment hydraté est le résultat de la réaction chimique entre un ciment et de l'eau mélangés dans un béton initial. La matière d'alimentation présente des dimensions inférieures à 6 millimètres.

Dans le broyeur 3, le phénomène d'attrition permet de libérer les grains de sable d'une matrice de pâte de ciment hydraté, et de broyer cette pâte de ciment hydraté en une poudre fine.

Au cours d'une étape E3, un flux gazeux, généralement de l'air, est envoyé à l'intérieur du broyeur 3 par une entrée 14 de gaz. Ce flux gazeux permet d'entraîner la partie la plus fine de la matière vers le système 4 de séparation. L'autre partie, à savoir les plus gros grains, est évacuée par une sortie 6 d'évacuation située à une extrémité 7 du broyeur 3. En variante, non représentée sur les dessins, tout ou partie de la matière sortante par la sortie 6 d'évacuation peut être transportée par un moyen de manutention vers le système 4 de séparation afin d'en retirer la pâte de ciment hydraté. De manière plus générale, le transport de la matière peut être réalisé par tout moyen de manutention.

Au cours d'une étape E4 de séparation, tout ou partie de la matière d'alimentation broyée est séparée dans le système 4 de séparation de sorte à évacuer la fraction sableuse par une sortie 8 de sable et à évacuer la fraction de pâte de ciment hydraté avec le flux gazeux par un échappement 9.

L'installation 2 comprend un filtre 10 et une cheminée 11. Le flux gazeux transportant la fraction de pâte de ciment hydraté est filtré dans le filtre 10 puis évacué par une cheminée 11. La fraction de pâte de ciment hydraté est récupérée par une sortie 12.

Avantageusement, la fraction sableuse contient une quantité de pâte de ciment hydraté inférieure ou égale à 25% et supérieure ou égale à 5% en masse et la fraction de pâte de ciment hydraté contient une quantité de pâte de ciment hydraté supérieure ou égale à 40% et inférieure ou égale à 95% en masse.

Le recyclage de la fraction sableuse ayant de telles proportions de pâte de ciment hydraté permet de réduire l'utilisation de ressources naturelles pour l'élaboration du béton. En effet cette fraction sableuse peut être utilisée en grande quantité en substitution de sable naturel.

Le recyclage de la fraction de pâte de ciment hydraté ayant de telles proportions de sable permet de réduire l'utilisation de ressources naturelles et apporte notamment de la chaux décarbonatée, ce qui réduit l'utilisation de calcaire dans le cru cimentier et donc la quantité de CO₂ émise par la décarbonatation de ce calcaire et la consommation de combustible correspondante. En effet cette fraction de pâte de ciment hydraté peut être utilisée en grande quantité dans le cru cimentier.

Le broyeur 3 comporte une chambre 13 sensiblement cylindrique à axe de rotation sensiblement horizontal dans laquelle logent les billes ou cylpebs (non représentés). L'attrition est réalisée en mettant en rotation la chambre 13 cylindrique. La chambre 13 présente une longueur L et un diamètre d tel que le rapport L/d est compris entre 1 et 5. Une telle chambre 13 permet d'obtenir le temps de séjour nécessaire et suffisant à l'attrition de la matière, sans broyer violemment les grains de sable.

Les billes ou cylpebs présentent un diamètre compris entre 5 et 20 millimètres. Les billes ou cylpebs sont en acier. La taille des billes ou cylpebs est adaptée pour apporter l'énergie juste nécessaire, c'est-à-dire ni trop ni pas assez d'énergie, aux billes ou cylpebs pour broyer la matière sans détériorer la structure des grains de sable, en limitant l'intensité des chocs entre ces billes ou cylpebs et la matière d'alimentation.

La vitesse de rotation de la chambre 13 est avantageusement comprise entre 60 et 85% de la vitesse critique. La vitesse critique est la vitesse minimale de centrifugation des billes ou cylpebs. Cette vitesse de rotation permet d'apporter l'énergie juste nécessaire aux billes ou cylpebs pour broyer la matière sans détériorer la structure des grains de sable.

Le flux gazeux parcourt le broyeur 3 à une vitesse comprise entre 0,5 et 3 mètres par seconde. Une telle vitesse de gaz permet d'évacuer du broyeur 3 la fraction la plus fine de la matière afin d'éviter que le broyeur 3 ne s'étouffe avec la matière et donc conserver l'efficacité du broyeur.

Le système 4 de séparation est un séparateur granulométrique. Avantageusement la maille de coupure du séparateur 4 granulométrique est comprise entre 50 et 300 micromètres. Cette maille de coupure permet d'obtenir une fraction sableuse et une fraction de pâte de ciment hydraté contenant respectivement les proportions de pâte de ciment hydraté et de sable précédemment évoquées.

D'autres mailles de coupure peuvent être utilisées.

A titre d'exemple une maille de coupure comprise entre 50 et 120 micromètres permet de privilégier la qualité de la fraction de la pâte de ciment hydraté au détriment de sa quantité et au détriment de la qualité de la fraction sableuse.

Une maille de coupure comprise entre 120 et 300 micromètres permet de privilégier la qualité de la fraction sableuse au détriment de sa quantité et au détriment de la qualité de la fraction de pâte de ciment hydraté.

Selon un mode préféré de réalisation cette maille de coupure est comprise entre 80 et 200 micromètres afin d'obtenir le meilleur compromis entre la qualité et la quantité recyclée de chaque fraction.

## Revendications

1. Procédé (1) pour dissocier différents constituants d'une fraction fine issue d'un procédé antérieur de dissociation d'un béton de déconstruction permettant la réutilisation de ces différents constituants dans la production d'un nouveau ciment et/ou d'un nouveau béton, la fraction fine comprenant du sable et au moins 30% en masse de pâte de ciment hydraté, la fraction fine étant ci-après dénommée la matière d'alimentation, le procédé mettant en œuvre une installation comportant :
- un système (3) d'attrition, et
- un système (4) de séparation,
et dans lequel le procédé (1) comprend :
- l'alimentation (E1) du système avec la matière d'alimentation pour broyer celle-ci,
- l'attrition (E2) de la matière d'alimentation, et
- la séparation (E4) de la matière d'alimentation broyée dans le système (3) d'attrition, est réalisée au moyen d'une maille de coupure du système (4) de séparation comprise entre 50 et 300 micromètres de sorte à obtenir une fraction sableuse comprenant une quantité de pâte de ciment hydraté inférieure ou égale à 25% et supérieure ou égale à 5% en masse, et en une fraction de pâte de ciment hydraté comprenant une quantité de pâte de ciment hydraté supérieure ou égale à 40% et inférieure ou égale à 95% en masse.

2. Procédé (1) selon la revendication 1 dans lequel, la matière d'alimentation alimentant le système (3) d'attrition présente des dimensions inférieures à 6 millimètres.

3. Procédé (1) selon l'une quelconque des revendications précédentes dans lequel, la séparation (E4) est réalisée au moyen d'une maille de coupure du système (4) de séparation comprise entre 80 et 200 micromètres.

4. Procédé (1) selon l'une quelconque des revendications précédentes, dans lequel l'attrition (E2) est réalisée au moyen du système (3) d'attrition comportant des corps broyant du type billes ou cylpebs.

5. Procédé (1) selon la revendication 4 dans lequel, l'attrition (E2) est réalisée au moyen du système (3) d'attrition qui comprend une chambre (13) sensiblement cylindrique de longueur L et de diamètre d, et dans lequel le rapport L/d est compris entre 1 et 5.

6. Procédé (1) selon l'une quelconque des revendications 4 ou 5 dans lequel, l'attrition (E2) est réalisée au moyen du système (3) d'attrition dont les billes ou cylpebs ont un diamètre compris entre 5 et 20 millimètres.

7. Procédé (1) selon l'une quelconque des revendications 4 à 6 dans lequel la vitesse de rotation du système (3) d'attrition est comprise entre 60 et 85% d'une vitesse critique correspondant à la vitesse à laquelle les billes sont centrifugées.

8. Procédé (1) selon l'une quelconque des revendications 4 à 7 dans lequel, la vitesse du gaz injecté dans le système (3) d'attrition est comprise entre 0,5 et 3 m/s.

## Patentansprüche

1. Verfahren (1) zum Trennen von verschiedenen Bestandteilen einer feinen Fraktion, die aus einem früheren Verfahren zum Trennen eines Baubetons stammt, das die Wiederverwendung dieser verschiedenen Bestandteile in der Produktion eines neuen Zements und/oder eines neuen Betons ermöglicht, wobei die feine Fraktion Sand und mindestens 30 Massen-% eines hydrierten Zementleims umfasst, wobei die feine Fraktion nachstehend Versorgungsmaterial genannt wird, wobei das Verfahren eine Anlage einsetzt, umfassend:
- ein Abriebsystem (3), und
- ein Trennungssystem (4),
und wobei das Verfahren (1) umfasst:
- die Versorgung (E1) des Systems mit dem Versorgungsmaterial, um dieses zu zerkleinern,
- den Abrieb (E2) des Versorgungsmaterials, und
- die Trennung (E4) des in dem Abriebsystem (3) zerkleinerten Versorgungsmaterials erfolgt mit Hilfe einer Kornscheide des Trennungssystems (4) zwischen 50 und 300 Mikrometern, um eine sandige Fraktion zu erhalten, umfassend eine Menge an hydriertem Zementleim kleiner oder gleich 25 Massen-% und größer oder gleich 5 Massen-%, und eine Fraktion von hydriertem Zementleim, umfassend eine Menge an hydriertem Zementleim größer oder gleich 40 Massen-% und kleiner oder gleich 95 Massen-%.

2. Verfahren (1) nach Anspruch 1, bei dem das Versorgungsmaterial, mit dem das Abriebsystem (3) versorgt wird, Dimensionen unter 6 Millimeter aufweist.

3. Verfahren (1) nach einem der vorhergehenden Ansprüche, bei dem die Trennung (E4) mit Hilfe einer Kornscheide des Trennungssystems (4) zwischen 80 und 200 Mikrometern erfolgt.

4. Verfahren (1) nach einem der vorhergehenden Ansprüche, bei dem der Abrieb (E2) mit Hilfe des Abriebsystems (3), umfassend Mahlkörper des Typs Kugeln oder Cylpebs.

5. Verfahren (1) nach Anspruch 4, bei dem der Abrieb (E2) mit Hilfe des Abriebsystems (3) erfolgt, das eine im Wesentlichen zylindrische Kammer (13) der Länge L und des Durchmessers d umfasst, und bei dem das Verhältnis L/d zwischen 1 und 5 beträgt.

6. Verfahren (1) nach einem der Ansprüche 4 oder 5, bei dem der Abrieb (E2) mit Hilfe des Abriebsystems (3) erfolgt, dessen Kugeln oder Cylpebs einen Durchmesser zwischen 5 und 20 Millimeter haben.

7. Verfahren (1) nach einem der Ansprüche 4 bis 6, bei dem die Rotationsgeschwindigkeit des Abriebsystems (3) zwischen 60 und 85 % einer kritischen Geschwindigkeit entsprechend der Geschwindigkeit, bei der die Kugeln zentrifugiert werden, liegt.

8. Verfahren (1) nach einem der Ansprüche 4 bis 7, bei dem die Geschwindigkeit des in das Abriebsystem (3) injizierten Gases zwischen 0,5 und 3 m/s beträgt.

## Claims

1. A method (1) for separating different constituents of a fine fraction resulting from a previous method for separating a concrete for deconstruction allowing the reuse of these different constituents in the production of a new cement and/or of a new concrete, the fine fraction comprising sand and at least 30% by mass of hydrated cement paste, the fine fraction being hereinafter referred to as the feed material, the method implementing a facility including:
- an attrition system (3), and
- a separation system (4),
and wherein the method (1) comprises:
- the feed (E1) of the system with the feed material to grind it,
- the attrition (E2) of feed material, and
- the separation (E4) of the ground feed material in the attrition system (3) is carried out by means of a cut-off mesh of the separation system (4) comprised between 50 and 300 micrometres so as to obtain a sandy fraction comprising an amount of hydrated cement paste less than or equal to 25% and greater than or equal to 5% by mass, and a fraction of hydrated cement paste comprising an amount of hydrated cement paste greater than or equal to 40% and less than or equal to 95% by mass.

2. The method (1) according to claim 1 wherein the feed material feeding the attrition system (3) has dimensions of less than 6 millimetres.

3. The method (1) according to any one of the preceding claims, wherein the separation (E4) is carried out by means of a cut-off mesh of the separation system (4) comprised between 80 and 200 micrometres.

4. The method (1) according to any one of the preceding claims, wherein the attrition (E2) is carried out by means of the attrition system (3) including grinding bodies of the ball or cylpebs type.

5. The method (1) according to claim 4 wherein the attrition (E2) is carried out by means of the attrition system (3) which comprises a substantially cylindrical chamber (13) of length L and of diameter d, and wherein the ratio L/d is comprised between 1 and 5.

6. The method (1) according to any one of claims 4 or 5 wherein the attrition (E2) is carried out by means of the attrition system (3) whose balls or cylpebs have a diameter comprised between 5 and 20 millimetres.

7. The method (1) according to any one of claims 4 to 6 wherein the rotational speed of the attrition system (3) is comprised between 60 and 85% of a critical speed corresponding to the speed at which the balls are centrifuged.

8. The method (1) according to any one of claims 4 to 7 wherein the speed of the gas injected into the attrition system (3) is comprised between 0.5 and 3 m/s.
